# EUROPEAN PATENT SPECIFICATION

(11) **EP 4 196 880 B1**
(45) Date of publication and mention of the grant of the patent: **15.05.2024**
(21) Application number: 20771527.7
(22) Date of filing: 09.09.2020
(51) Int. Cl.: G06F 11/14

(54) **DEVICES AND METHODS FOR FAST BACKUP**
VORRICHTUNGEN UND VERFAHREN FÜR SCHNELLES BACKUP
DISPOSITIFS ET PROCÉDÉS DE SAUVEGARDE RAPIDE

(43) Date of publication of application: 21.06.2023
(73) Proprietor: Huawei Technologies Co., Ltd., Shenzhen, Guangdong 518129 (CN)
(72) Inventor: NATANZON, Assaf, 80992 Munich (DE); DAVID, Yehonatan, 80992 Munich (DE)
(74) Representative: Roth, Sebastian
(86) International application number: PCT/EP2020/075241
(87) International publication number: WO 2022/053135

(56) References cited:
- US-A1- 2019 109 870

## Description

### TECHNICAL FIELD

The present disclosure relates to the field of computer systems with backup mechanisms, in particular, to the field of secondary storage systems. The disclosure allows backing up a computer system considering deduplication. This disclosure further allows restoring a previous backup in a fast and efficient manner. To this end, the present disclosure provides a first entity and a second entity, and corresponding methods, for backing up a primary storage system in a secondary storage system.

### BACKGROUND

Secondary storage systems and primary storage systems sometimes integrate with encryption engines and compression engines. These engines are used to keep the data in a different format, by decrypting the data on the primary storage system and encrypting it again with the same key on the secondary storage system. An issue with backing up of encrypted data is that the amount of change is huge. For instance, if one file is encrypted, the whole file system of the primary storage system needs to be transferred again to the secondary storage system, and not only deduplication suffers, but also the amount of data that needs to be written is huge.

Further, during recovery from the secondary storage system, the data needs to be decrypted and encrypted again. This can have significant impact on the recovery time, especially if the secondary storage system wants to serve the data directly, due to the fact that there is a need to operate on any piece of data being read. Usually the user wants to recover the data from latest point in time in the secondary storage system, and thus would like the latest point in time to be recovered as fast as possible.

US 2019/109870 A1 discloses storing a copy of primary data stored on one or more primary storage devices associated with the client computing device on a secondary storage device.

### SUMMARY

In view of the above-mentioned challenges, embodiments of the disclosure aim to provide an improved solution for backing up data in a secondary storage system. An objective is, in particular, to back up the data in a manner that allows improved deduplication. One aim is to not pass all the data after the operation, to the secondary storage system. Further, it is also desired to enable fast recovery of data on the secondary storage system from the latest point in time, and thus to reduce the recovery time.

The objective is achieved by the embodiments of the disclosure as described in the enclosed independent claims. Advantageous implementations of the embodiments of the disclosure are further defined in the dependent claims.

A first aspect of the present disclosure provides a first entity for backing up a data volume of a primary storage system in a secondary storage system, configured to: determine one or more operations performed on the data volume of the primary storage system; generate one or more sets of instructions, wherein each set of instructions is associated with a respective operation of the one or more operations, and each set of instructions is indicative of how to perform the respective operation and how to perform an inverse operation of the respective operation; and provide the one or more sets of instructions to a second entity on the secondary storage system.

This disclosure accordingly proposes to detect reversible operations performed on the primary storage system, and to further provide the reversible operations and corresponding instructions, instead of providing the changed data itself, to the secondary storage system. This disclosure thus allows the secondary storage system to mirror operations happening on the primary storage system, particularly to all images in the secondary storage system. Thereby, it does not suffer from an overhead of sending a huge amount of data. Further, the instructions, which include inverse operations, allow the secondary storage system to quickly recover an image to its original state.

In an implementation form of the first aspect, the first entity is further configured to obtain a first snapshot of the data volume of the primary storage system at a time point T1; and provide the first snapshot to the second entity for creating a first backup image of the data volume at time point T1.

In an implementation form of the first aspect, the first entity is further configured to determine a first operation performed on one or more files of the data volume after the time point T1 and before a time point T2, wherein files of the data volume other than the one or more files remain unchanged; and provide a first set of instructions associated with the first operation to the second entity for creating a second backup image of the data volume at time point T2, wherein the first set of instructions is indicative of how to perform the first operation on the one or more files to create updated one or more files, and how to perform an inverse operation of the first operation on the updated one or more files to obtain the one or more files.

In an implementation form of the first aspect, the one or more operations comprise data encryption, and/or data compression.

These operations are heavy I/O operations that would change a huge amount of data, for example, in a disk. Notably, this disclosure also applies to any other reversible operations.

In an implementation form of the first aspect, if an operation of the one or more operations comprises data encryption, a set of instructions associated with the operation comprises an encryption algorithm and an encryption key used to encrypt the data, and a decryption algorithm and a decryption key used to decrypt the encrypted data and to obtain the data.

Notably, when the first entity tracks data encryption performed on some files, it may save the encryption algorithm, the old key (if the files was already encrypted), the new key and the set of encrypted files.

In an implementation form of the first aspect, if an operation of the one or more operations comprises data compression, a set of instructions associated with the operation comprise a compression algorithm and a de-compression algorithm.

Similarly, when the first entity tracks data compression performed on some files, it may save the compression algorithm, and the set of compressed files.

A second aspect of the present disclosure provides a second entity on a secondary storage system for backing up a data volume of a primary storage system, configured to: obtain one or more sets of instructions from a first entity, wherein each set of instructions is associated with a respective operation performed on the data volume, and is indicative of how to perform the respective operation and how to perform an inverse operation of the respective operation.

Embodiments of the disclosure propose to not send files after the reversible operation, but rather the reversible operation itself, to the secondary storage system. In this way, a huge amount of data that was going to send to the secondary storage system is avoid. In addition, the second entity is able to mirror the reversible operation, and is also able to recover an image to its original state by performing an inverse operation.

In an implementation form of the second aspect, the second entity is further configured to: obtain a first snapshot of the data volume at a time point T1 from the first entity; and backup the first snapshot to create a first backup image of the data volume at time point T1.

In an implementation form of the second aspect, the second entity is further configured to: obtain a first set of instructions from the first entity, wherein the first set of instructions is associated with a first operation performed on one or more files of the data volume after the time point T1 and before a time point T2, and the first set of instructions is indicative of how to perform the first operation on the one or more files to create updated one or more files, and how to perform an inverse operation of the first operation on the updated one or more files to obtain the one or more files, wherein files of the data volume other than the one or more files remain unchanged; perform the first operation on the same one or more files in the first backup image to obtain a second backup image of the data volume at time point T2; and store the inverse operation of the first operation that is indicated in the first set of instructions.

That is, the second entity creates the new files after the first operation, by performing the first operation on the files that exists on previous copies. Further, the reverse operation of the first operation will be stored and attached to the new file created, in order to be able to recover an old version of files (the version before the first operation).

In an implementation form of the second aspect, the second entity is further configured to replace the one or more files in the first backup image with a pointer to the one or more files after the first operation in the second backup image, and the inverse operation of the first operation.

Notably, after the second entity obtains the latest backup image (the one after the reversible operation), and stores the reversible operation (with the instructions on how to create the files from newest backup), the original files may be deleted from all previous backups. In this way, the deduplication of the secondary storage system can be improved.

In an implementation form of the second aspect, the second entity is further configured to restore the first backup image by performing the inverse operation of the first operation on the one or more files in the second backup image obtained by performing the first operation.

In an implementation form of the second aspect, the first operation comprises data encryption, and/or data compression.

In an implementation form of the second aspect, if the first operation comprises data compression, a first set of instructions associated with the first operation comprise a compression algorithm and a de-compression algorithm, wherein the second entity is configured to: compress the one or more files in the first backup image using the compression algorithm, to obtain the second backup image; and replace the one or more files in the first backup image with a pointer to the compressed one or more files in the second backup image, and the de-compression algorithm.

In particular, the second entity may mirror the reversible operation, in this case the data compression, to create a new backup image, i.e., the second backup image. Further, the old backup image, i.e., the first backup image, may be updated as well. That is, instead of keeping the original uncompressed file(s), the first backup image may keep a pointer to the new compressed file(s) in the second backup image, and the inverse operation, i.e., the de-compression algorithm.

In an implementation form of the second aspect, the second entity is further configured to: restore the first backup image by de-compressing the compressed one or more files in the second backup image using the de-compression algorithm.

The stored inverse operation, i.e., the de-compression algorithm, allows the second entity to restore the backup image to the previous time point.

In an implementation form of the second aspect, if the first operation comprises data encryption, a first set of instructions associated with the first operation comprises an encryption algorithm and an encryption key used to encrypt the data, and a decryption algorithm and a decryption key used to decrypt the encrypted data and to obtain the data, wherein the second entity is configured to: encrypt the one or more files in the first backup image using the encryption algorithm and the encryption key, to obtain the second backup image; and replace the one or more files in the first backup image with a pointer to the encrypted one or more files in the second backup image, and the decryption algorithm and the decryption key.

In particular, the second entity may mirror the reversible operation, in this case the data encryption, to create a new backup image, i.e., the second backup image. Further, the old backup image, i.e., the first backup image, may be updated as well. That is, instead of keeping the original unencrypted file(s), the first backup image may keep a pointer to the new encrypted file(s) in the second backup image, and the inverse operation, i.e., the decryption algorithm and the decryption key.

In an implementation form of the second aspect, the second entity is further configured to restore the first backup image by decrypting the encrypted one or more files in the second backup image using the decryption algorithm and the decryption key.

The stored inverse operation, i.e., the decryption algorithm and the decryption key, allows the second entity to restore the backup image to the previous time point.

In an implementation form of the second aspect, if the one or more files in the first backup image are encrypted with a previous encryption algorithm and a previous encryption key, before encrypting the one or more files in the first backup image using the encryption algorithm and the encryption key, the second entity is further configured to: decrypt the one or more files in the first backup image using a previous decryption algorithm and a previous decryption key.

It is worth mentioning that the one or more files may be encrypted files. In such case, the reversible operation may further comprise first decrypting the one or more files with an old key. After encrypting the decrypted files with a new key, the encrypted files using the old key may be deleted. Accordingly, the inverse operation may further comprise re-encrypting the file with the old key, after decrypting them using the new key.

In an implementation form of the second aspect, the second entity is further configured to: restore the first backup image by decrypting the encrypted one or more files in the second backup image using the decryption algorithm and the decryption key, and re-encrypt said one or more files using the previous encryption algorithm and the previous encryption key.

A third aspect of the present disclosure provides a backup system comprising a primary storage system comprising a data volume, a first entity according to the first aspect or one of its respective implementation forms, and a second entity according to the second aspect or one of its respective implementation forms.

The system of the third aspect and its implementation forms provide the same advantages and effects as described above for the first entity of the first aspect and its respective implementation forms, and the second entity of the second aspect and its respective implementation forms.

A fourth aspect of the present disclosure provides a method for backing up a data volume of a primary storage system in a secondary storage system. The method is performed by a first entity, the method comprising: determining one or more operations performed on the data volume of the primary storage system; generating one or more sets of instructions, wherein each set of instructions is associated with a respective operation of the one or more operations, and each set of instructions is indicative of how to perform the respective operation and how to perform an inverse operation of the respective operation; and providing the one or more sets of instructions to a second entity on the secondary storage system.

The method of the fourth aspect and its implementation forms provide the same advantages and effects as described above for the first entity of the first aspect and its respective implementation forms.

A fifth aspect of the present disclosure provides a method for backing up a data volume of a primary storage system. The method is performed by a second entity, the method comprising: obtaining one or more sets of instructions from a first entity, wherein each set of instructions is associated with a respective operation performed on the data volume, and each set of instructions is indicative of how to perform the respective operation and how to perform an inverse operation of the respective operation.

The method of the fifth aspect and its implementation forms provide the same advantages and effects as described above for the second entity of the second aspect and its respective implementation forms.

A sixth aspect of the present disclosure provides a computer program comprising a program code for carrying out, when implemented on a processor, the method according to the fourth aspect or any of its implementation forms, or the fifth aspect or any of its implementation forms.

It has to be noted that all devices, elements, units and means described in the present application could be implemented in the software or hardware elements or any kind of combination thereof.

All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- FIG. 1: shows a first entity according to an embodiment of the disclosure.
- FIG. 2: shows a first entity and a second entity according to embodiments of the disclosure.
- FIG. 3: shows a second entity according to an embodiment of the disclosure.
- FIG. 4: shows a first entity and a second entity according to embodiments of the disclosure.
- FIG. 5: shows a backup system according to an embodiment of the disclosure.
- FIG. 6: shows a method according to an embodiment of the disclosure.
- FIG. 7: shows a method according to an embodiment of the disclosure.

### DETAILED DESCRIPTION OF EMBODIMENTS

Illustrative embodiments of method, device, and program product for backing up data in a secondary storage system are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

Notably, from time to time, customers may run a tool that performs many I/O operations and changes disk data, files, software programs and operating systems. Some of these operations affect compression and deduplication ratios significantly. Many of the operations are reversible, i.e. there is an inverse operation that can take the data to its previous state.

Examples of such operations include full disk encryption, encryption of specific files, archiving a set of documents (in a compressed format such as zip or rar), and any other operations which can be reversed. Full disk encryption is a cryptographic method that applies encryption to the entire hard drive. In addition, once in a while the encryption key of an already encrypted drive will be changed.

Such operations are not caught by standard deduplication techniques and thus increase the amount of data on the backup system significantly. Another problem with the conventional method is that during recovery the data needs to be decrypted and encrypted again and this can have significant impact on the recovery time, especially if the secondary storage wants to serve the data directly, due to the fact that there is a need to operate on any piece of data being read. Usually the user wants to recover the latest point in time in the backup system and thus would like the latest point in time to be recovered as fast as possible.

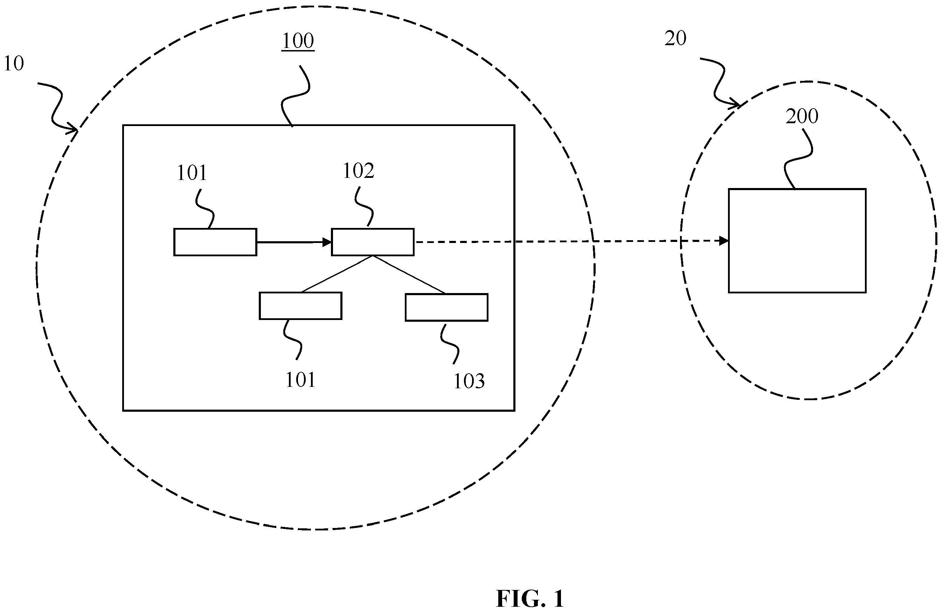

FIG. 1 shows a first entity 100 according to an embodiment of the disclosure. The first entity 100 is adapted for backing up a data volume in a secondary storage system 20, wherein the data volume is of a primary storage system 10. For instance, the primary storage system 10 may be a production system comprising a production device, and the data volume may be of the production device. In particular, the first entity 100 is configured to determine one or more operations 101 performed on the data volume of the primary storage system 10. The first entity 100 is further configured to generate one or more sets of instructions 102. In particular, each set of instructions 102 is associated with a respective operation 101 of the one or more operations 101. Further, each set of instructions 102 is indicative of how to perform the respective operation 101 and how to perform an inverse operation 103 of the respective operation 101. Further, the first entity 100 is configured to provide the one or more sets of instructions 102 to a second entity 200 on the secondary storage system 20.

Notably, the first entity 100 may be an application or an agent installed in the primary storage system 10. The second entity 200 may be an application or an agent installed in the second storage system 20. It is also possible that the first entity 100 or the second entity 200 may run in an application host connected to the primary storage system 10, or in the second storage system 20, respectively. For instance, a windows host may be connected to the primary storage system 10, and the first entity 100 may run inside the windows host.

It should be noted that the one or more operations 101 may be performed inside a host connected to the primary storage system 10, e.g., the windows host as above mentioned, while the first entity 100 may run for example inside the windows host.

Possibly, the second entity 200 may be adapted to back up the data volume of the primary storage system 10. Notably, the backup may be applied in a granularity of a volume like C:\, D:\ in a disk of the primary storage system 10 (for instance, when it is used for Windows operation systems), or a partition of the disk of the primary storage system 10 (for instance, in Linux systems). The first entity 100 may be adapted to support the second entity 200 for backing up the data volume, e.g., to provide information required for the backup. For ease of the description, the backing up of a data volume is discussed in embodiments of the disclosure. However, it is worth mentioning that this disclosure can apply for backing up block devices as well. The procedures of backing up a block device are similar to the procedures described in the following embodiments.

The first entity 100 may comprise processing circuitry (not shown) configured to perform, conduct or initiate the various operations of the first entity 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the first entity 100 to perform, conduct or initiate the operations or methods described herein.

This disclosure proposes to mirror operations that happen on a host of the primary storage system 10, or a host connected to the primary storage system 10. For instance, the operations may be mirrored to all images in the backup storage system, i.e., the secondary storage system 20. In particular, these operations performed on the host of the primary storage system 10, may be reversible. That is, by performing the corresponding inverse operation, the data can be restored to its previous state. Therefore, an instruction set for an old image may be kept for recovering that image to its original state where necessary.

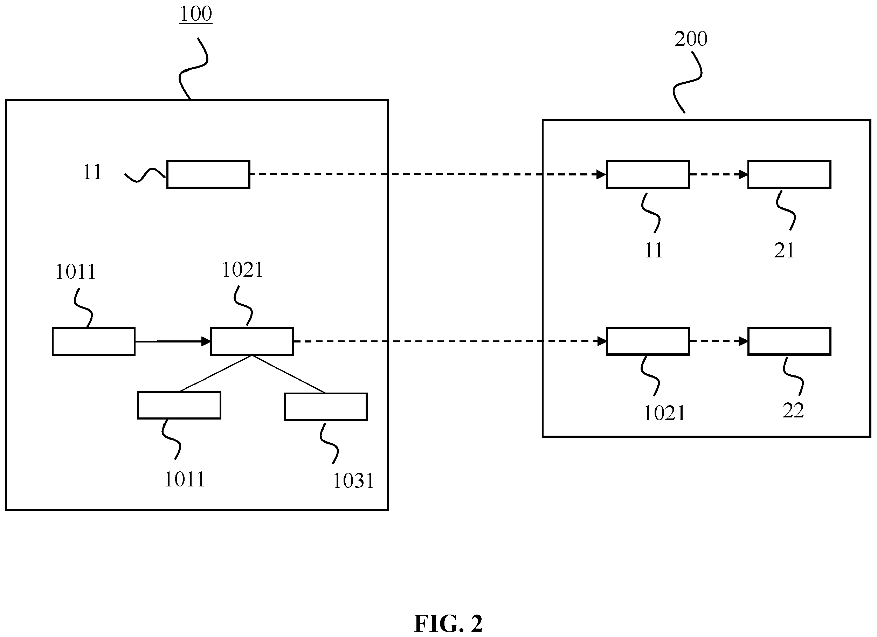

FIG. 2 shows a backup process according to an embodiment of the disclosure. The first entity 100 and the second entity 200 may be the first entity and the second entity as shown in FIG. 1. In particular, the first entity 100 is configured to obtain a first snapshot 11 of the data volume of the primary storage system 10 at a time point T 1. The first entity 100 is further configured to provide the first snapshot 11 to the second entity 200 for creating a first backup image 21 of the data volume at time point T1.

Typically, a user may back up a file system from time to time. That is, for the file system, multiple copies (backup images) may be created at different time points. For instance, if a copy is created at a certain point in time, before a next backup is created, an operation, particularly a reversible operation, may be performed on a set of files in the file system. The first entity 100 may track this operation, and saves a set of instructions on how to perform the operation and the inverse operation.

Optionally, according to an embodiment of the disclosure, the first entity 100 may be further configured to determine a first operation 1011 performed on one or more files of the data volume after the time point T1 and before a time point T2, wherein files of the data volume other than the one or more files remain unchanged. That is, compared to the last backup (i.e., the first backup image 21), only that particular one or more files, on which the first operation 1011 was performed, are changed.

Then, the first entity 100 is further configured to provide a first set of instructions 1021 associated with the first operation 1011 to the second entity 200 for creating a second backup image 22 of the data volume at time point T2, wherein the first set of instructions 1021 is indicative of how to perform the first operation 1011 on the one or more files to create updated one or more files, and how to perform an inverse operation 1031 of the first operation 1011 on the updated one or more files to obtain the one or more files.

Possibly, the one or more operations 101 as shown in FIG. 1, and the first operation 1011 as shown in FIG. 2, may comprise data encryption, and/or data compression. Notably, these two kinds of operations are typical reversible operations.

In particular, data encryption may be performed on some specific files of a file system or the entire file system, by using an encryption algorithm and an encryption key. To reverse such operation, data decryption may be performed, by using a corresponding decryption algorithm and a decryption key. A set of files may also be compressed, for instance in a compressed format such as zip or rar. To reverse such operation, a de-compression process can be performed.

It should be noted, these two operations are examples of reversible operations. This disclosure also applies to any other operation which can be reversed. This is not specific limited in embodiments of the disclosure.

Optionally, according to an embodiment of the disclosure, if an operation 101 of the one or more operations 101 comprises data encryption, a set of instructions 102 associated with the operation 101 may comprise an encryption algorithm and an encryption key used to encrypt the data, and a decryption algorithm and a decryption key used to decrypt the encrypted data and to obtain the data. That is, the set of instructions 102 may be indicative of how to perform the respective operation 101, i.e., data encryption in this case, and how to perform an inverse operation 103 of the data encryption, i.e., data decryption.

Optionally, according to another embodiment of the disclosure, if an operation 101 of the one or more operations 101 comprises data compression, a set of instructions 102 associated with the operation 101 may comprise a compression algorithm and a de-compression algorithm. Possibly, the set of instructions 102 may also comprise algorithm parameters, such as a compression level, and other possible parameters.

Notably, for the operations such as data encryption and data compression, an amount of data that is changed may be huge. If such data needs to be transferred again to the secondary storage system, not only deduplication suffers, but also the amount of data that needs to be written is huge. Thus, this disclosure proposes to provide only the reversible operation itself, instead of the data that is changed, to the secondary storage system. Thereby, an overhead of sending a huge amount of data can be saved.

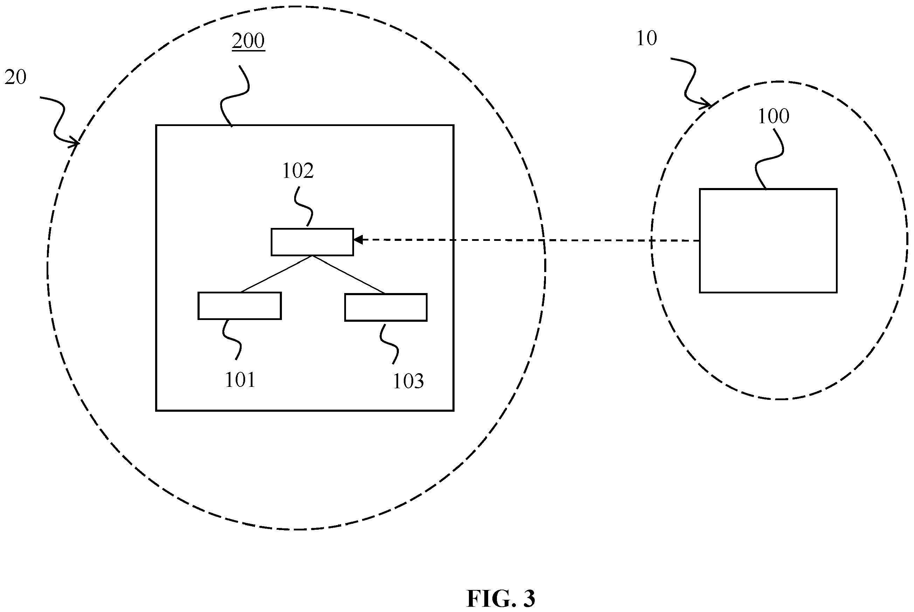

FIG. 3 shows a second entity 200 according to an embodiment of the disclosure. The second entity 200 is adapted for backing up a data volume in a secondary storage system 20, wherein the data volume is of a primary storage system 10. In particular, the second entity 200 is configured to obtain one or more sets of instructions 102 from a first entity 100, wherein each set of instructions 102 is associated with a respective operation 101 performed on the disk data volume, and is indicative of how to perform the respective operation 101 and how to perform an inverse operation 103 of the respective operation 101.

Notably, the first entity 100 may be the first entity 100 as shown in FIG. 1 or FIG. 2. The second entity 200 may be the second entity 200 as shown in FIG. 1 or FIG. 2.

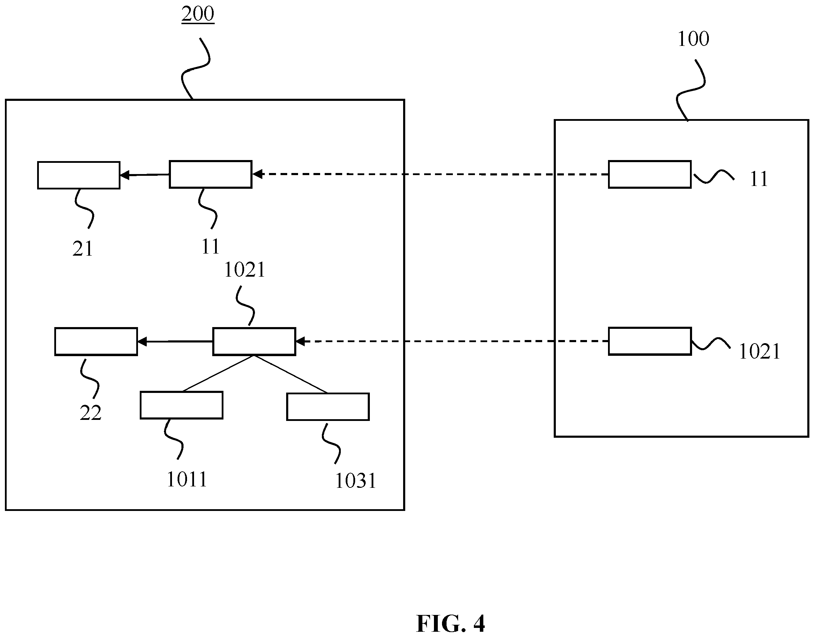

The second entity 200 may comprise processing circuitry (not shown) configured to perform, conduct or initiate the various operations of the second entity 200 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the second entity 200 to perform, conduct or initiate the operations or methods described herein. FIG. 4 shows a backup process according to an embodiment of the disclosure. The second entity 200 may be the second entity as shown in FIG. 1, FIG. 2 or FIG. 3. The first entity 100 may also be the first entity as shown in FIG. 1, FIG. 2 or FIG. 3. According to this embodiment, the second entity 200 is configured to obtain a first snapshot 11 of the data volume at a time point T1 from the first entity 100. Accordingly, the second entity 200 is further configured to backup the first snapshot 11 to create a first backup image 21 of the data volume at time point T1.

The second entity 200 is further configured to obtain a first set of instructions 1021 from the first entity 100. The first set of instructions 1021 are associated with a first operation 1011 performed on one or more files of the data volume after the time point T1 and before a time point T2. In particular, the first set of instructions 1021 is indicative of how to perform the first operation 1011 on the one or more files to create updated one or more files, and how to perform an inverse operation 1031 of the first operation 1011 on the updated one or more files to obtain the one or more files, wherein files of the data volume other than the one or more files remain unchanged.

Accordingly, the second entity 200 is further configured to perform the first operation 1011 on the same one or more files in the first backup image 21 to obtain a second backup image 22 of the data volume at time point T2.

As previously described, between two consecutive backup images, a reversible operation may be performed on a set of files in the file system. Instead of passing all data (a set of files that a reversible operation was performed on, and the rest unchanged files) to the secondary storage system 20 for backup, this disclosure proposes to send only the reversible operation to secondary storage system 20. This allows the second entity 200 performing the same reversible operation on the same set of files in the previous backup image, to obtain a new backup image.

According to an embodiment of the disclosure, the second entity 200 is further configured to store the inverse operation 1031 of the first operation 1011 that is indicated in the first set of instructions 1012. That is, the corresponding inverse operation of the reversible operation should be saved, for the recovery of the previous backup image.

Optionally, according to an embodiment of the disclosure, the second entity 200 may be further configured to replace the one or more files in the first backup image 21 with a pointer to the one or more files after the first operation 1011 in the second backup image 22, and the inverse operation 1031 of the first operation 1011.

In addition, for deduplication, this disclosure further allows not keeping all whole backup images in the secondary storage systems. That is, after a latest backup image is created, the original files on which the reversible operation was performed, may be deleted from all previous backup images, and may be replaced with instructions on how to create the original files from the latest backup image.

Optionally, according to an embodiment of the disclosure, the second entity 200 may be further configured to restore the first backup image 21 by performing the inverse operation 1031 of the first operation 1011 on the one or more files in the second backup image 22 obtained by performing the first operation 1011.

Similarly as the aforementioned embodiments, the one or more operations 101 as shown in FIG. 3, or the first operations 1011 as shown in FIG. 4, may comprise data encryption, and/or data compression. Notably, these two kinds of operations are typical reversible operations.

Based on the aforementioned embodiments, it can be seen that, if the first operation 1011 comprises data compression, a set of instructions associated with the first operation comprise a compression algorithm and a de-compression algorithm. According to an embodiment of the disclosure, the second entity 200 may be further configured to compress the one or more files in the first backup image using the compression algorithm, to obtain the second backup image. Further, the second entity 200 may be configured to replace the one or more files in the first backup image 21 with a pointer to the compressed one or more files in the second backup image 22, and the de-compression algorithm.

Further, according to an embodiment of the disclosure, the second entity 200 may be configured to restore the first backup image 21 by de-compressing the compressed one or more files in the second backup image 22 using the de-compression algorithm.

Based on the aforementioned embodiments, it can be seen that, if the first operation 1011 comprises data encryption, a set of instructions associated with the operation comprises an encryption algorithm and an encryption key used to encrypt the data, and a decryption algorithm and a decryption key used to decrypt the encrypted data and to obtain the data.

Optionally, according to an embodiment of the disclosure, the second entity 200 may be configured to encrypt the one or more files in the first backup image 21 using the encryption algorithm and the encryption key, to obtain the second backup image 22. Further, the second entity 200 may be configured to replace the one or more files in the first backup image 21 with a pointer to the encrypted one or more files in the second backup image 22, and the decryption algorithm and the decryption key.

Accordingly, the second entity 200 may be further configured to restore the first backup image 21 by decrypting the encrypted one or more files in the second backup image 22 using the decryption algorithm and the decryption key.

Further, it is worth mentioning that the one or more files in the first backup image 21 may be encrypted with a previous encryption algorithm and a previous encryption key. In such case, according to an embodiment of the disclosure, before encrypting the one or more files in the first backup image 21 using the encryption algorithm and the encryption key, the second entity 200 may be further configured to decrypt the one or more files in the first backup image 21 using a previous decryption algorithm and a previous decryption key.

Optionally, according to an embodiment of the disclosure, the second entity 200 may be configured to restore the first backup image 21 by decrypting the encrypted one or more files in the second backup image 22 using the decryption algorithm and the decryption key, and re-encrypt said one or more files using the previous encryption algorithm and the previous encryption key.

This disclosure further proposes a backup system comprising a primary storage system 10 comprising a data volume, a first entity 100 as shown in one of FIG. 1 to FIG. 4, and a second entity 200 as shown in one of FIG. 1 to FIG. 4.

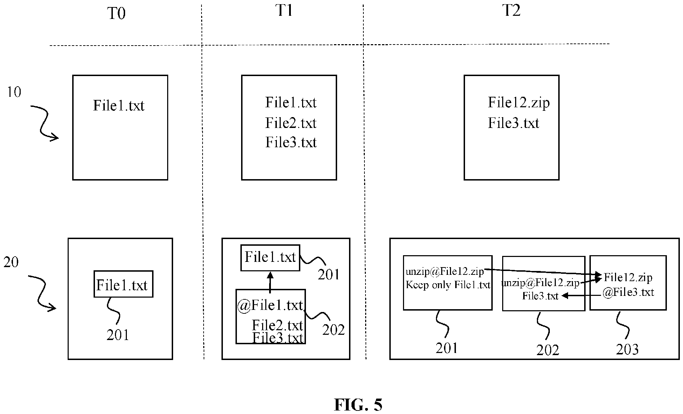

FIG. 5 shows a backup system according to an embodiment of the disclosure. In the following, an embodiment of the present disclosure is described in detail.

As shown in FIG. 5, at the primary storage system 10, for instance, the data volume of the primary storage system 10 comprises "File1.txt" at time point T0. In the following, new files, i.e., "File2.txt" and "File3.txt", are created before time point T1. Before time point T2, "File1.txt" and "File2.txt" are further archived into a new file "File12.zip", and the original files "File1.txt" and "File2.txt" are deleted. According to embodiments of the disclosure, this operation is tracked by the first entity 100.

At the secondary storage system 20, as shown in FIG. 5, a backup image 201 created at T0 comprises "File1.txt". At T1, two backup images exist in the secondary storage system 20, i.e., the backup image 201 and a backup image 202 created at T1. Notably, the backup image 202 should comprise data about "File1.txt", "File2.txt" and "File3.txt". According to this embodiment, "File1.txt" is stored only one time in the secondary storage system 20, thus in the backup image 202 a pointer instead of the full file (of "File1.txt") is kept. That is, the backup image 202 comprises "File2.txt", "File3.txt", and a pointer pointing to the backup image 201 which contains "File1.txt". Further, before T2 a reversible operation occurred in the primary storage system 10, i.e., File1.txt" and "File2.txt" are archived into a new file "File12.zip".

Therefore, there are three backup images in the secondary storage system 20 at T2. A backup image 203 created at T2 contains "File12.zip" and a pointer to "File3.txt" stored in the backup image 202.

It is worth mentioning that, according to this embodiment, the backup image 202 will be updated after the backup image 203 has been created at T2. In particular, in the backup image 202, instead of keeping "File1.txt" (i.e., a pointer to "File1.txt") and "File2.txt", a pointer to "File12.zip" that is stored in the backup image 203 and a corresponding instruction that is needed for restoring the backup image 202 are kept. That is, the updated backup image 202 comprises "unzip@File12.zip" as show in FIG. 5 and "File3.txt" that remains as it was, where "unzip@File12.zip" indicates an instruction of "unzip" and a point to "File12.zip".This means, to recovery the backup image 202, the second entity 200 need to decompress (e.g., unzip) the file "File12.zip".

Similarly, the backup image 201 will be updated as well after the backup image 203 has been created at T2. According to this embodiment, in the backup image 201, instead of keeping "File1.txt", a pointer to "File12.zip" and an instruction to decompress only "File1.txt" out of the archive, are kept.

Further, it should be noted that, in the previous embodiments, one or more files are discussed, however, in a variable size deduplication system, each file may be treated as a set of chunks created by deduplication chunking algorithms and then apply the same algorithm when treating each chunk as a file.

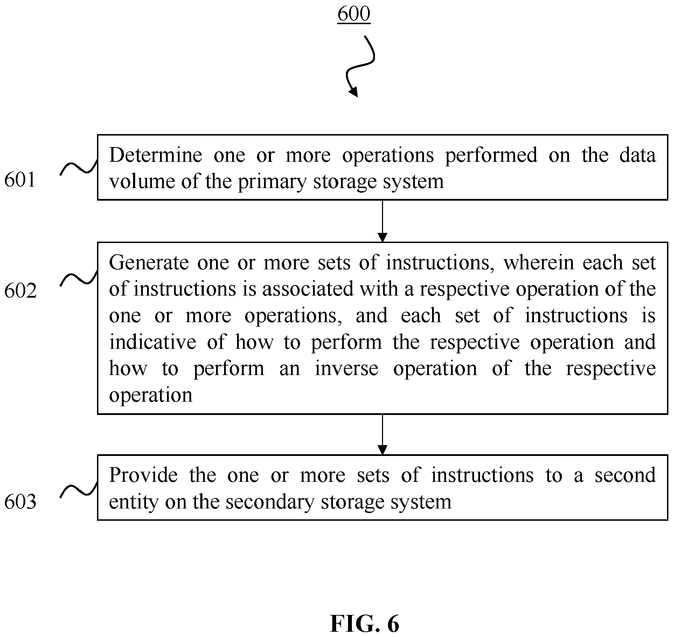

FIG. 6 shows a method 600 for backing up a data volume of a primary storage system 10 according to an embodiment of the disclosure. In a particular embodiment of the disclosure, the method 600 is performed by a first entity 100 shown in one of FIG. 1 to FIG. 4. The method 600 comprises: a step 601 of determining one or more operations 101 performed on the data volume of the primary storage system 10; a step 602 of generating one or more sets of instructions 102, wherein each set of instructions 102 is associated with a respective operation 101 of the one or more operations 101, and each set of instructions 102 is indicative of how to perform the respective operation 101 and how to perform an inverse operation 103 of the respective operation 101; and a step 603 of providing the one or more sets of instructions 102 to a second entity 200 on the secondary storage system 20.

Notably, the method 600 may further comprise actions as described in aforementioned embodiments of the first entity 100.

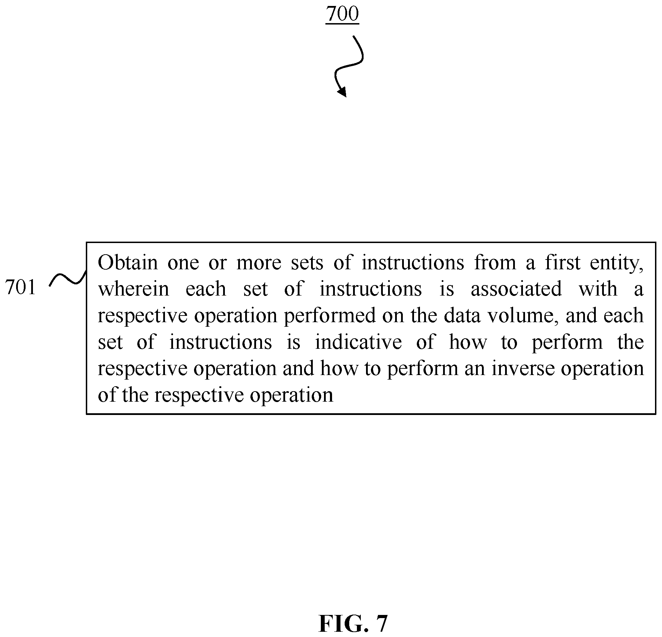

FIG. 7 shows a method 700 for backing up a data volume of a primary storage system 10 according to an embodiment of the disclosure. In a particular embodiment of the disclosure, the method 700 is performed by a second entity 200 shown in one of FIG. 1 to FIG. 4. The method 700 comprises a step 701 of obtaining one or more sets of instructions 102 from a first entity 100. In particular, the first entity 100 may be as shown in one of FIG. 1 to FIG. 4. Each set of instructions 102 is associated with a respective operation 101 performed on the data volume, and each set of instructions 102 is indicative of how to perform the respective operation 101 and how to perform an inverse operation 103 of the respective operation 101.

Notably, the method 700 may further comprise actions as described in aforementioned embodiments of the second entity 200.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the first entity 100 and/or the second entity 200 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the first entity 100 and/or the second entity 200 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

## Claims

1. A first entity (100) for backing up a data volume of a primary storage system (10) in a secondary storage system (20), configured to:
determine one or more operations (101) performed on the data volume of the primary storage system (10), wherein the one or more operations (101) are reversible;
generate one or more sets of instructions (102), wherein each set of instructions (102) is associated with a respective operation (101) of the one or more operations (101), and each set of instructions (102) is indicative of how to perform the respective operation (101) and how to perform an inverse operation (103) of the respective operation (101); and
provide the one or more sets of instructions (102) to a second entity (200) on the secondary storage system (20),
wherein the first entity (100) is further configured to:
obtain a first snapshot (11) of the data volume of the primary storage system (10) at a time point T1; and
provide the first snapshot (11) to the second entity (200) for creating a first backup image (21) of the data volume at time point T1;
determine a first operation (1011) performed on one or more files of the data volume after the time point T1 and before a time point T2, wherein files of the data volume other than the one or more files remain unchanged; and
provide a first set of instructions (1021) associated with the first operation (1011) to the second entity (200) for creating a second backup image (22) of the data volume at time point T2, wherein the first set of instructions (1021) is indicative of how to perform the first operation (1011) on the one or more files to create updated one or more files, and how to perform an inverse operation (1031) of the first operation (1011) on the updated one or more files to obtain the one or more files.

2. The first entity (100) according to claim 1, wherein the one or more operations (101) comprise data encryption, and/or data compression.

3. The first entity (100) according to claim 2, wherein if an operation (101) of the one or more operations (101) comprises data encryption, a set of instructions (102) associated with the operation (101) comprises an encryption algorithm and an encryption key used to encrypt the data, and a decryption algorithm and a decryption key used to decrypt the encrypted data and to obtain the data.

4. The first entity (100) according to claim 2 or 3, wherein if an operation (101) of the one or more operations (101) comprises data compression, a set of instructions (102) associated with the operation (101) comprise a compression algorithm and a de-compression algorithm.

5. A second entity (200) on a secondary storage system (20) for backing up a data volume of a primary storage system (10), configured to:
obtain one or more sets of instructions (102) from a first entity (100), wherein each set of instructions (102) is associated with a respective operation (101) performed on the data volume, and is indicative of how to perform the respective operation (101) and how to perform an inverse operation (103) of the respective operation (101), wherein the respective operation (101) is reversible;
obtain a first snapshot (11) of the data volume at a time point T1 from the first entity (100); and
backup the first snapshot (11) to create a first backup image (21) of the data volume at time point T1; and
obtain a first set of instructions (1021) from the first entity (100), wherein the first set of instructions (1021) is associated with a first operation (1011) performed on one or more files of the data volume after the time point T1 and before a time point T2, and the first set of instructions (1021) is indicative of how to perform the first operation (1011) on the one or more files to create updated one or more files, and how to perform an inverse operation (1031) of the first operation (1011) on the updated one or more files to obtain the one or more files, wherein files of the data volume other than the one or more files remain unchanged;
perform the first operation (1011) on the same one or more files in the first backup image (21) to obtain a second backup image (22) of the data volume at time point T2; and
store the inverse operation (1031) of the first operation (1011) that is indicated in the first set of instructions (1012).

6. The second entity (200) according to claim 5, configured to:
replace the one or more files in the first backup image (21) with a pointer to the one or more files after the first operation (1011) in the second backup image (22), and the inverse operation (1031) of the first operation (1011).

7. The second entity (200) according to claim 6, configured to:
restore the first backup image (21) by performing the inverse operation (1031) of the first operation (1011) on the one or more files in the second backup image (22) obtained by performing the first operation (1011).

8. The second entity (200) according to any of the claims 5 to 7, wherein the first operation (1011) comprises data encryption, and/or data compression.

9. The second entity (200) according to claim 8, wherein if the first operation (1011) comprises data compression, a first set of instructions (1021) associated with the first operation (1011) comprise a compression algorithm and a de-compression algorithm, wherein the second entity is configured to:
compress the one or more files in the first backup image (21) using the compression algorithm, to obtain the second backup image (22); and
replace the one or more files in the first backup image (21) with a pointer to the compressed one or more files in the second backup image (22), and the de-compression algorithm.

10. The second entity (200) according to claim 9, configured to:
restore the first backup image (21) by de-compressing the compressed one or more files in the second backup image (22) using the de-compression algorithm.

11. The second entity (200) according to claim 10, wherein if the first operation (1011) comprises data encryption, a first set of instructions (1021) associated with the first operation (1011) comprises an encryption algorithm and an encryption key used to encrypt the data, and a decryption algorithm and a decryption key used to decrypt the encrypted data and to obtain the data, wherein the second entity (200) is configured to:
encrypt the one or more files in the first backup image (21) using the encryption algorithm and the encryption key, to obtain the second backup image (22); and
replace the one or more files in the first backup image (21) with a pointer to the encrypted one or more files in the second backup image (22), and the decryption algorithm and the decryption key.

12. The second entity (200) according to claim 11, configured to:
restore the first backup image (21) by decrypting the encrypted one or more files in the second backup image (22) using the decryption algorithm and the decryption key.

13. A backup system comprising a primary storage system (10) comprising a data volume, a first entity (100) according to one of the claims 1 to 4 and a second entity (200) according to one of the claims 5 to 12.

14. A method (600) for backing up a data volume of a primary storage system (10) in a secondary storage system (20), the method comprising:
determining (601) one or more operations (101) performed on the data volume of the primary storage system (10), wherein the one or more operations (101) are reversible;
generating (602) one or more sets of instructions (102), wherein each set of instructions (102) is associated with a respective operation (101) of the one or more operations (101), and each set of instructions (102) is indicative of how to perform the respective operation (101) and how to perform an inverse operation (103) of the respective operation (101); and
providing (603) the one or more sets of instructions (102) to a second entity (200) on the secondary storage system (20);
obtaining a first snapshot (11) of the data volume of the primary storage system (10) at a time point T1; and
providing the first snapshot (11) to the second entity (200) for creating a first backup image (21) of the data volume at time point T1;
determining a first operation (1011) performed on one or more files of the data volume after the time point T1 and before a time point T2, wherein files of the data volume other than the one or more files remain unchanged; and
providing a first set of instructions (1021) associated with the first operation (1011) to the second entity (200) for creating a second backup image (22) of the data volume at time point T2, wherein the first set of instructions (1021) is indicative of how to perform the first operation (1011) on the one or more files to create updated one or more files, and how to perform an inverse operation (1031) of the first operation (1011) on the updated one or more files to obtain the one or more files.

15. A method (700) for backing up a data volume of a primary storage system, the method comprising:
obtaining (701) one or more sets of instructions (102) from a first entity (100), wherein each set of instructions (102) is associated with a respective operation (101) performed on the data volume, and each set of instructions (102) is indicative of how to perform the respective operation (101) and how to perform an inverse operation (103) of the respective operation (101), wherein the respective operations (101) is reversible;
obtaining a first snapshot (11) of the data volume at a time point T1 from the first entity (100); and
backing up the first snapshot (11) to create a first backup image (21) of the data volume at time point T1; and
obtaining a first set of instructions (1021) from the first entity (100), wherein the first set of instructions (1021) is associated with a first operation (1011) performed on one or more files of the data volume after the time point T1 and before a time point T2, and the first set of instructions (1021) is indicative of how to perform the first operation (1011) on the one or more files to create updated one or more files, and how to perform an inverse operation (1031) of the first operation (1011) on the updated one or more files to obtain the one or more files, wherein files of the data volume other than the one or more files remain unchanged;
performing the first operation (1011) on the same one or more files in the first backup image (21) to obtain a second backup image (22) of the data volume at time point T2; and
storing the inverse operation (1031) of the first operation (1011) that is indicated in the first set of instructions (1012).

## Patentansprüche

1. Erste Einheit (100) zum Backup eines Datenvolumens eines primären Speichersystems (10) in einem sekundären Speichersystem (20), konfiguriert zum:
Bestimmen einer oder mehrerer Operationen (101), die auf dem Datenvolumen des primären Speichersystems (10) durchgeführt werden, wobei die eine oder mehreren Operationen (101) reversibel sind;
Erzeugen eines oder mehrerer Sätze von Anweisungen (102), wobei jeder Satz von Anweisungen (102) einer jeweiligen Operation (101) der einen oder mehreren Operationen (101) zugeordnet ist und jeder Satz von Anweisungen (102) angibt, wie die jeweilige Operation (101) durchzuführen ist und wie eine inverse Operation (103) der jeweiligen Operation (101) durchzuführen ist; und Bereitstellen des einen oder der mehreren Sätze von Anweisungen (102) an eine zweite Einheit (200) auf dem sekundären Speichersystem (20),
wobei die erste Einheit (100) ferner konfiguriert ist zum:
Erlangen eines ersten Snapshots (11) des Datenvolumens des primären Speichersystems (10) zu einem Zeitpunkt T1; und
Bereitstellen des ersten Snapshots (11) an die zweite Einheit (200) zum Erstellen eines ersten Backup-Bilds (21) des Datenträgers zum Zeitpunkt T1;
Bestimmen einer ersten Operation (1011), die an einer oder mehreren Dateien des Datenvolumens nach dem Zeitpunkt T1 und vor einem Zeitpunkt T2 durchgeführt wurde, wobei andere Dateien des Datenvolumens als die eine oder mehreren Dateien unverändert bleiben; und
Bereitstellen eines ersten Satzes von Anweisungen (1021), welcher der ersten Operation (1011) zugeordnet ist, an die zweite Einheit (200) zum Erzeugen eines zweiten Backup-Bilds (22) des Datenvolumens zum Zeitpunkt T2, wobei der erste Satz von Anweisungen (1021) angibt, wie die erste Operation (1011) an der einen oder den mehreren Dateien durchzuführen ist, um eine oder mehrere aktualisierte Dateien zu erzeugen, und wie eine inverse Operation (1031) der ersten Operation (1011) an der/den aktualisierten einen oder mehreren Dateien durchzuführen ist, um die eine oder mehreren Dateien zu erlangen.

2. Erste Einheit (100) nach Anspruch 1, wobei die eine oder mehreren Operationen (101) Datenverschlüsselung und/oder Datenkompression umfassen.

3. Erste Einheit (100) nach Anspruch 2, wobei, wenn eine Operation (101) der einen oder mehreren Operationen (101) Datenverschlüsselung umfasst, ein Satz von Anweisungen (102), welcher der Operation (101) zugeordnet ist, einen Verschlüsselungsalgorithmus und einen Verschlüsselungsschlüssel, die zum Verschlüsseln der Daten verwendet werden, und einen Entschlüsselungsalgorithmus und einen Entschlüsselungsschlüssel, die zum Entschlüsseln der verschlüsselten Daten und zum Erlangen der Daten verwendet werden, umfasst.

4. Erste Einheit (100) nach Anspruch 2 oder 3, wobei, wenn eine Operation (101) der einen oder mehreren Operationen (101) Datenkompression umfasst, ein Satz von Anweisungen (102), welcher der Operation (101) zugeordnet ist, einen Kompressionsalgorithmus und einen Dekompressionsalgorithmus umfasst.

5. Zweite Einheit (200) auf einem sekundären Speichersystem (20) zum Backup eines Datenvolumens eines primären Speichersystems (10), konfiguriert zum:
Erlangen eines oder mehrerer Sätze von Anweisungen (102) von einer ersten Einheit (100), wobei jeder Satz von Anweisungen (102) einer jeweiligen Operation (101) zugeordnet ist, die auf dem Datenvolumen durchgeführt wird, und angibt, wie die jeweilige Operation (101) durchzuführen ist und wie eine inverse Operation (103) der jeweiligen Operation (101) durchzuführen ist, wobei die jeweilige Operation (101) reversibel ist;
Erlangen eines ersten Snapshots (11) des Datenvolumens zu einem Zeitpunkt T1 von der ersten Einheit (100); und
Backup des ersten Snapshots (11), um ein erstes Backup-Bild (21) des Datenvolumens zu Zeitpunkt T1 zu erzeugen; und
Erlangen eines ersten Satzes von Anweisungen (1021) von der ersten Einheit (100), wobei der erste Satz von Anweisungen (1021) einer ersten Operation (1011) zugeordnet ist, die an einer oder mehreren Dateien des Datenvolumens nach dem Zeitpunkt T1 und vor einem Zeitpunkt T2 durchgeführt wird, und wobei der erste Satz von Anweisungen (1021) angibt, wie die erste Operation (1011) an der einen oder den mehreren Dateien durchzuführen ist, um eine oder mehrere aktualisierte Dateien zu erzeugen, und wie eine inverse Operation (1031) der ersten Operation (1011) an der/den aktualisierten einen oder mehreren Dateien durchzuführen ist, um die eine oder mehreren Dateien zu erlangen, wobei andere Dateien des Datenvolumens als die eine oder mehreren Dateien unverändert bleiben;
Durchführen der ersten Operation (1011) an der/den gleichen einen oder mehreren Dateien in dem ersten Backup-Bild (21), um ein zweites Backup-Bild (22) des Datenvolumens zum Zeitpunkt T2 zu erlangen; und
Speichern der inversen Operation (1031) der ersten Operation (1011), die in dem ersten Satz von Anweisungen (1012) angegeben ist.

6. Zweite Einheit (200) nach Anspruch 5, konfiguriert zum:
Ersetzen der einen oder mehreren Dateien in dem ersten Backup-Bild (21) durch einen Zeiger auf die eine oder mehreren Dateien nach der ersten Operation (1011) in dem zweiten Backup-Bild (22) und der inversen Operation (1031) der ersten Operation (1011).

7. Zweite Einheit (200) nach Anspruch 6, konfiguriert zum: Wiederherstellen des ersten Backup-Bilds (21) durch Durchführen der inversen Operation (1031) der ersten Operation (1011) an der einen oder den mehreren Dateien in dem zweiten Backup-Bild (22), das durch das Durchführen der ersten Operation (1011) erlangt wird.

8. Zweite Einheit (200) nach einem der Ansprüche 5 bis 7, wobei die erste Operation (1011) Datenverschlüsselung und/oder Datenkompression umfasst.

9. Zweite Einheit (200) nach Anspruch 8, wobei, wenn die erste Operation (1011) Datenkompression umfasst, ein erster Satz von Anweisungen (1021), welcher der ersten Operation (1011) zugeordnet ist, einen Kompressionsalgorithmus und einen Dekompressionsalgorithmus umfasst, wobei die zweite Einheit konfiguriert ist zum:
Komprimieren der einen oder mehreren Dateien in dem ersten Backup-Bild (21) unter Verwendung des Kompressionsalgorithmus, um das zweite Backup-Bild (22) zu erlangen; und
Ersetzen der einen oder mehreren Dateien in dem ersten Backup-Bild (21) durch einen Zeiger auf die verschlüsselte(n) eine oder mehreren Dateien in dem zweiten Backup-Bild (22) und des Dekompressionsalgorithmus.

10. Zweite Einheit (200) nach Anspruch 9, konfiguriert zum: Wiederherstellen des ersten Backup-Bilds (21) durch Dekomprimieren der komprimierten einen oder mehrerer Dateien im zweiten Backup-Bild (22) unter Verwendung des Dekompressionsalgorithmus.

11. Zweite Einheit (200) nach Anspruch 10, wobei, wenn die erste Operation (1011) die Datenverschlüsselung umfasst, ein erster Satz von Anweisungen (1021), welcher der ersten Operation (1011) zugeordnet ist, einen Verschlüsselungsalgorithmus und einen Verschlüsselungsschlüssel, die zum Verschlüsseln der Daten verwendet werden, und einen Entschlüsselungsalgorithmus und einen Entschlüsselungsschlüssel, die zum Entschlüsseln der verschlüsselten Daten und zum Erlangen der Daten verwendet werden, umfasst, wobei die zweite Einheit (200) konfiguriert ist zum:
Verschlüsseln der einen oder mehreren Dateien in dem ersten Backup-Bilds (21) unter Verwendung des Verschlüsselungsalgorithmus und des Verschlüsselungsschlüssels, um das zweite Backup-Bild (22) zu erlangen; und
Ersetzen der einen oder mehreren Dateien in dem ersten Backup-Bild (21) durch einen Zeiger auf die verschlüsselte(n) eine oder mehreren Dateien in dem zweiten Backup-Bild (22) sowie des Entschlüsselungsalgorithmus und des Entschlüsselungsschlüssels.

12. Zweite Einheit (200) nach Anspruch 11, konfiguriert zum:
Wiederherstellen des ersten Backup-Bilds (21) durch Entschlüsseln der verschlüsselten Dateien in dem zweiten Backup-Bild (22) unter Verwendung des Entschlüsselungsalgorithmus und des Entschlüsselungsschlüssels.

13. Backup-System, umfassend ein primäres Speichersystem (10), das ein Datenvolumen, eine erste Einheit (100) nach einem der Ansprüche 1 bis 4 und eine zweite Einheit (200) nach einem der Ansprüche 5 bis 12 umfasst.

14. Verfahren (600) zum Backup eines Datenvolumens eines primären Speichersystems (10) in einem sekundären Speichersystem (20), wobei das Verfahren Folgendes umfasst:
Bestimmen (601) einer oder mehrerer Operationen (101), die auf dem Datenvolumen des primären Speichersystems (10) durchgeführt werden, wobei die eine oder mehreren Operationen (101) reversibel sind;
Erzeugen (602) eines oder mehrerer Sätze von Anweisungen (102), wobei jeder Satz von Anweisungen (102) einer jeweiligen Operation (101) der einen oder mehreren Operationen (101) zugeordnet ist und jeder Satz von Anweisungen (102) angibt, wie die jeweilige Operation (101) durchzuführen ist und wie eine inverse Operation (103) der jeweiligen Operation (101) durchzuführen ist; und
Bereitstellen (603) des einen oder der mehreren Sätze von Anweisungen (102) an eine zweite Einheit (200) auf dem sekundären Speichersystem (20),
Erlangen eines ersten Snapshots (11) des Datenvolumens des primären Speichersystems (10) zu einem Zeitpunkt T1; und
Bereitstellen des ersten Snapshots (11) an die zweite Einheit (200) zum Erstellen eines ersten Backup-Bilds (21) des Datenträgers zum Zeitpunkt T1;
Bestimmen einer ersten Operation (1011), die an einer oder mehreren Dateien des Datenvolumens nach dem Zeitpunkt T1 und vor einem Zeitpunkt T2 durchgeführt wird, wobei andere Dateien des Datenvolumens als die eine oder mehreren Dateien unverändert bleiben; und
Bereitstellen eines ersten Satzes von Anweisungen (1021), welcher der ersten Operation (1011) zugeordnet ist, an die zweite Einheit (200) zum Erzeugen eines zweiten Backup-Bilds (22) des Datenvolumens zum Zeitpunkt T2, wobei der erste Satz von Anweisungen (1021) angibt, wie die erste Operation (1011) an der einen oder den mehreren Dateien durchzuführen ist, um eine oder mehrere aktualisierte Dateien zu erzeugen, und wie eine inverse Operation (1031) der ersten Operation (1011) an der/den aktualisierten einen oder mehreren Dateien durchzuführen ist, um die eine oder mehreren Dateien zu erlangen.

15. Verfahren (700) zum Backup eines Datenvolumens eines primären Speichersystems, wobei das Verfahren Folgendes umfasst:
Erlangen (701) eines oder mehrerer Sätze von Anweisungen (102) von einer ersten Einheit (100), wobei jeder Satz von Anweisungen (102) einer jeweiligen Operation (101) zugeordnet ist, die auf dem Datenvolumen durchgeführt wird, und wobei jeder Satz von Anweisungen (102) angibt, wie die jeweilige Operation (101) durchzuführen ist und wie eine inverse Operation (103) der jeweiligen Operation (101) durchzuführen ist, wobei die jeweilige Operation (101) reversibel ist;
Erlangen eines ersten Snapshots (11) des Datenvolumens zu einem Zeitpunkt T1 von der ersten Einheit (100); und
Backup des ersten Snapshots (11), um ein erstes Backup-Bild (21) des Datenvolumens zu Zeitpunkt T1 zu erzeugen; und
Erlangen eines ersten Satzes von Anweisungen (1021) von der ersten Einheit (100), wobei der erste Satz von Anweisungen (1021) einer ersten Operation (1011) zugeordnet ist, die an einer oder mehreren Dateien des Datenvolumens nach dem Zeitpunkt T1 und vor einem Zeitpunkt T2 durchgeführt wird, und wobei der erste Satz von Anweisungen (1021) angibt, wie die erste Operation (1011) an der einen oder den mehreren Dateien durchzuführen ist, um eine oder mehrere aktualisierte Dateien zu erzeugen, und wie eine inverse Operation (1031) der ersten Operation (1011) an der/den aktualisierten einen oder mehreren Dateien durchzuführen ist, um die eine oder mehreren Dateien zu erlangen, wobei andere Dateien des Datenvolumens als die eine oder mehreren Dateien unverändert bleiben;
Durchführen der ersten Operation (1011) an der/den gleichen einen oder mehreren Dateien in dem ersten Backup-Bild (21), um ein zweites Backup-Bild (22) des Datenvolumens zum Zeitpunkt T2 zu erlangen; und
Speichern der inversen Operation (1031) der ersten Operation (1011), die in dem ersten Satz von Anweisungen (1012) angegeben ist.

## Revendications

1. Première entité (100) pour sauvegarder un volume de données d'un système de stockage principal (10) dans un système de stockage secondaire (20), configurée pour :
déterminer une ou plusieurs opérations (101) réalisées sur le volume de données du système de stockage principal (10), dans laquelle les une ou plusieurs opérations (101) sont réversibles ;
générer un ou plusieurs ensembles d'instructions (102), dans laquelle chaque ensemble d'instructions (102) est associé à une opération respective (101) des une ou plusieurs opérations (101), et chaque ensemble d'instructions (102) indique comment réaliser l'opération respective (101) et comment réaliser une opération inverse (103) de l'opération respective (101) ; et
fournir les un ou plusieurs ensembles d'instructions (102) à une seconde entité (200) sur le système de stockage secondaire (20),
dans laquelle la première entité (100) est en outre configurée pour :
obtenir un premier instantané (11) du volume de données du système de stockage principal (10) à un instant T1 ; et
fournir le premier instantané (11) à la seconde entité (200) pour créer une première image de sauvegarde (21) du volume de données à l'instant T1 ;
déterminer une première opération (1011) réalisée sur un ou plusieurs fichiers du volume de données après l'instant T1 et avant un instant T2, dans laquelle des fichiers du volume de données autres que les un ou plusieurs fichiers restent inchangés ; et
fournir un premier ensemble d'instructions (1021) associé à la première opération (1011) à la seconde entité (200) pour créer une seconde image de sauvegarde (22) du volume de données à l'instant T2, dans laquelle le premier ensemble d'instructions (1021) indique comment réaliser la première opération (1011) sur les un ou plusieurs fichiers pour créer un ou plusieurs fichiers mis à jour, et comment réaliser une opération inverse (1031) de la première opération (1011) sur les un ou plusieurs fichiers mis à jour pour obtenir les un ou plusieurs fichiers.

2. Première entité (100) selon la revendication 1, dans laquelle les une ou plusieurs opérations (101) comprennent le cryptage de données et/ou la compression de données.

3. Première entité (100) selon la revendication 2, dans laquelle si une opération (101) des une ou plusieurs opérations (101) comprend un cryptage de données, un ensemble d'instructions (102) associé à l'opération (101) comprend un algorithme de cryptage et une clé de cryptage utilisés pour crypter les données, et un algorithme de décryptage et une clé de décryptage utilisés pour décrypter les données cryptées et pour obtenir les données.

4. Première entité (100) selon la revendication 2 ou 3, dans laquelle si une opération (101) des une ou plusieurs opérations (101) comprend une compression de données, un ensemble d'instructions (102) associé à l'opération (101) comprend un algorithme de compression et un algorithme de décompression.

5. Seconde entité (200) pour sauvegarder un volume de données d'un système de stockage principal (10) dans un système de stockage secondaire (20), configurée pour :
obtenir un ou plusieurs ensembles d'instructions (102) à partir d'une première entité (100), dans laquelle chaque ensemble d'instructions (102) est associé à une opération respective (101) réalisée sur le volume de données, et indique comment réaliser l'opération respective (101) et comment réaliser une opération inverse (103) de l'opération respective (101), dans laquelle l'opération respective (101) est réversible ;
obtenir un premier instantané (11) du volume de données à un instant T1 auprès de la première entité (100) ; et
sauvegarder le premier instantané (11) pour créer une première image de sauvegarde (21) du volume de données à l'instant T1 ; et
obtenir un premier ensemble d'instructions (1021) auprès de la première entité (100), dans laquelle le premier ensemble d'instructions (1021) est associé à une première opération (1011) réalisée sur un ou plusieurs fichiers du volume de données après l'instant T1 et avant un instant T2, et le premier ensemble d'instructions (1021) indique comment réaliser la première opération (1011) sur les un ou plusieurs fichiers pour créer un ou plusieurs fichiers mis à jour, et comment réaliser une opération inverse (1031) de la première opération (1011) sur les un ou plusieurs fichiers mis à jour pour obtenir les un ou plusieurs fichiers, dans laquelle des fichiers du volume de données autres que les un ou plusieurs fichiers restent inchangés ;
réaliser la première opération (1011) sur les un ou plusieurs mêmes fichiers dans la première image de sauvegarde (21) pour obtenir une seconde image de sauvegarde (22) du volume de données à l'instant T2 ; et
stocker l'opération inverse (1031) de la première opération (1011) qui est indiquée dans le premier ensemble d'instructions (1012).

6. Seconde entité (200) selon la revendication 5, configurée pour :
remplacer les un ou plusieurs fichiers dans la première image de sauvegarde (21) par un pointeur vers les un ou plusieurs fichiers après la première opération (1011) dans la seconde image de sauvegarde (22), et l'opération inverse (1031) de la première opération (1011).

7. Seconde entité (200) selon la revendication 6, configurée pour :
restaurer la première image de sauvegarde (21) en réalisant l'opération inverse (1031) de la première opération (1011) sur les un ou plusieurs fichiers dans la seconde image de sauvegarde (22) obtenue en réalisant la première opération (1011).

8. Seconde entité (200) selon l'une quelconque des revendications 5 à 7, dans laquelle la première opération (1011) comprend le cryptage de données et/ou la compression de données.

9. Seconde entité (200) selon la revendication 8, dans laquelle si la première opération (1011) comprend une compression de données, un premier ensemble d'instructions (1021) associé à la première opération (1011) comprend un algorithme de compression et un algorithme de décompression, dans laquelle la seconde entité est configurée pour :
compresser les un ou plusieurs fichiers dans la première image de sauvegarde (21) à l'aide de l'algorithme de compression, pour obtenir la seconde image de sauvegarde (22) ; et
remplacer les un ou plusieurs fichiers dans la première image de sauvegarde (21) par un pointeur vers les un ou plusieurs fichiers compressés dans la seconde image de sauvegarde (22), et l'algorithme de décompression.

10. Seconde entité (200) selon la revendication 9, configurée pour :
restaurer la première image de sauvegarde (21) en décompressant les un ou plusieurs fichiers compressés dans la seconde image de sauvegarde (22) à l'aide de l'algorithme de décompression.

11. Seconde entité (200) selon la revendication 10, dans laquelle si la première opération (1011) comprend le cryptage de données, un premier ensemble d'instructions (1021) associé à la première opération (1011) comprend un algorithme de cryptage et une clé de cryptage utilisés pour crypter les données, et un algorithme de décryptage et une clé de décryptage utilisés pour décrypter les données cryptées et pour obtenir les données, dans laquelle la seconde entité (200) est configurée pour :
crypter les un ou plusieurs fichiers dans la première image de sauvegarde (21) à l'aide de l'algorithme de cryptage et de la clé de cryptage, pour obtenir la seconde image de sauvegarde (22) ; et
remplacer les un ou plusieurs fichiers dans la première image de sauvegarde (21) par un pointeur vers les un ou plusieurs fichiers cryptés dans la seconde image de sauvegarde (22), ainsi que l'algorithme de décryptage et la clé de décryptage.

12. Seconde entité (200) selon la revendication 11, configurée pour :
restaurer la première image de sauvegarde (21) en décryptant les un ou plusieurs fichiers cryptés dans la seconde image de sauvegarde (22) à l'aide de l'algorithme de décryptage et de la clé de décryptage.

13. Système de sauvegarde comprenant un système de stockage principal (10) comprenant un volume de données, une première entité (100) selon l'une des revendications 1 à 4 et une seconde entité (200) selon l'une des revendications 5 à 12.

14. Procédé (600) de sauvegarde d'un volume de données d'un système de stockage principal (10) dans un système de stockage secondaire (20), le procédé comprenant :
la détermination (601) d'une ou de plusieurs opérations (101) réalisées sur le volume de données du système de stockage principal (10), dans lequel les une ou plusieurs opérations (101) sont réversibles ;
la génération (602) d'un ou de plusieurs ensembles d'instructions (102), dans lequel chaque ensemble d'instructions (102) est associé à une opération respective (101) des une ou plusieurs opérations (101), et chaque ensemble d'instructions (102) indique comment réaliser l'opération respective (101) et comment réaliser une opération inverse (103) de l'opération respective (101) ; et
la fourniture (603) des un ou plusieurs ensembles d'instructions (102) à une seconde entité (200) sur le système de stockage secondaire (20) ;
l'obtention d'un premier instantané (11) du volume de données du système de stockage principal (10) à un instant T1 ; et
la fourniture du premier instantané (11) à la seconde entité (200) pour créer une première image de sauvegarde (21) du volume de données à l'instant T1 ;
la détermination d'une première opération (1011) réalisée sur un ou plusieurs fichiers du volume de données après l'instant T1 et avant un instant T2, dans lequel les fichiers du volume de données autres que les un ou plusieurs fichiers restent inchangés ; et
la fourniture d'un premier ensemble d'instructions (1021) associé à la première opération (1011) à la seconde entité (200) pour créer une seconde image de sauvegarde (22) du volume de données à l'instant T2, dans lequel le premier ensemble d'instructions (1021) indique comment réaliser la première opération (1011) sur les un ou plusieurs fichiers pour créer un ou plusieurs fichiers mis à jour, et comment réaliser une opération inverse (1031) de la première opération (1011) sur les un ou plusieurs fichiers mis à jour pour obtenir les un ou plusieurs fichiers.

15. Procédé (700) de sauvegarde d'un volume de données d'un système de stockage principal, le procédé comprenant :
l'obtention (701) d'un ou de plusieurs ensembles d'instructions (102) à partir d'une première entité (100), dans lequel chaque ensemble d'instructions (102) est associé à une opération respective (101) réalisée sur le volume de données, et chaque ensemble d'instructions (102) indique comment réaliser l'opération respective (101) et comment réaliser une opération inverse (103) de l'opération respective (101), dans lequel l'opération respective (101) est réversible ;
l'obtention d'un premier instantané (11) du volume de données à un instant T1 auprès de la première entité (100) ; et
la sauvegarde du premier instantané (11) pour créer une première image de sauvegarde (21) du volume de données à l'instant T1 ; et
l'obtention d'un premier ensemble d'instructions (1021) auprès de la première entité (100), dans lequel le premier ensemble d'instructions (1021) est associé à une première opération (1011) réalisée sur un ou plusieurs fichiers du volume de données après l'instant T1 et avant un instant T2, et le premier ensemble d'instructions (1021) indique comment réaliser la première opération (1011) sur les un ou plusieurs fichiers pour créer un ou plusieurs fichiers mis à jour, et
comment réaliser une opération inverse (1031) de la première opération (1011) sur les un ou plusieurs fichiers mis à jour pour obtenir les un ou plusieurs fichiers, dans lequel les fichiers du volume de données autres que les un ou plusieurs fichiers restent inchangés ;
la réalisation de la première opération (1011) sur les un ou
plusieurs mêmes fichiers dans la première image de sauvegarde (21) pour obtenir une seconde image de sauvegarde (22) du volume de données à l'instant T2 ; et
le stockage de l'opération inverse (1031) de la première opération (1011) qui est indiquée dans le premier ensemble d'instructions (1012).
